# EUROPEAN PATENT APPLICATION

(11) **EP 4 142 376 A1**
(43) Date of publication of application: **01.03.2023**
(21) Application number: 21809318.5
(22) Date of filing: 16.03.2021
(51) Int. Cl.: H04W 48/16, H04W 48/20, H04W 76/10

(54) **NETWORK ACCESS METHOD AND COMMUNICATION APPARATUS**

(30) Priority: 22.05.2020 CN 202010446525
(71) Applicant: GUANGDONG OPPO MOBILE TELECOMMUNICATIONS CORP., LTD., Dongguan, Guangdong 523860 (CN)
(72) Inventor: TANG, Kai, Dongguan, Guangdong, Guangdong 523860 (CN)
(74) Representative: Taor, Simon Edward William
(86) International application number: PCT/CN2021/081124
(87) International publication number: WO 2021/232910

(57) **Abstract**

A method for network access and communication devices are provided in the disclosure. The method includes the following. The terminal device acquires a first frequency point list after determining a first frequency point cell, where the first frequency point list includes at least one frequency point, and each frequency point in the first frequency point list is determined by the terminal device as not supporting a slice service requested by the terminal device. Determine a second frequency point cell in response to a first frequency point corresponding to the first frequency point cell being in the first frequency point list, where a second frequency point corresponding to the second frequency point cell is not in the first frequency point list. According to the method, efficiency of network access can be improved.

## Description

### TECHNICAL FIELD

This disclosure relates to the field of communication technologies, and particularly to a method for network access and communication devices.

### BACKGROUND

Network slicing is an on-demand networking mode, which can allow an access network device to be separated into multiple virtual end to end (E2E) networks. Each network slice is logically isolated from a radio access network, to a bearer network, and to a core network, to adapt to various application scenarios. The access network device is configured with at least one frequency point, and for each frequency point, at least one frequency point cell corresponding to the frequency point is distributed. Different frequency points may support different network slice services, so that some frequency point cells may not support a certain network slice service, where the network slice service is supported and requested by a terminal.

In related art, when an access network device detects that a frequency point cell connected with a terminal does not support a network slice service requested by the terminal, the access network device releases connection between the frequency point cell and the terminal. However, when requesting network access subsequently, the terminal may reestablish communication connection with the frequency point cell, and the communication connection may be released again by the access network device, thus efficiency of network access is greatly reduced.

### SUMMARY

A method for network access and communication devices are provided in the disclosure, which can improve efficiency of network access.

In a first aspect, a method for network access is provided in implementations of the disclosure. The method includes the following. A terminal device acquires a first frequency point list after determining a first frequency point cell, where the first frequency point list includes at least one frequency point, and each frequency point in the first frequency point list is determined by the terminal device as not supporting a slice service requested by the terminal device. Determine a second frequency point cell in response to a first frequency point corresponding to the first frequency point cell being in the first frequency point list, where a second frequency point corresponding to the second frequency point cell is not in the first frequency point list.

In an implementation, transmit a communication-connection-setup complete message for the first frequency point cell to a first access network device, in response to the first frequency point corresponding to the first frequency point cell being not in the first frequency point list, where the communication-connection-setup complete message includes the slice service requested by the terminal device.

In an implementation, receive a first downlink message from the first access network device after transmitting the communication-connection-setup complete message for the first frequency point cell to the first access network device, and add the first frequency point corresponding to the first frequency point cell to the first frequency point list, in response to the first downlink message from the first access network device being a communication connection release message for the first frequency point cell accessed by the terminal device.

In an implementation, the terminal device is currently in a first registration area.

In an implementation, delete the first frequency point list in response to the terminal device being moved into a second registration area from the first registration area.

In an implementation, acquire a storage time that a third frequency point in the first frequency point list is stored into the first frequency point list, where the third frequency point is any frequency point in the first frequency point list. Delete the third frequency point from the first frequency point list in response to an interval between a current time and the storage time being longer than a preset interval.

In an implementation, the communication connection release message includes redirection information, where the redirection information indicates the second frequency point supporting the slice service requested by the terminal device.

In an implementation, delete the second frequency point from the first frequency point list upon detecting that the second frequency point is stored in the first frequency point list.

In an implementation, the communication connection release message indicates that the first frequency point does not support the slice service requested by the terminal device.

In an implementation, determine a fourth frequency point cell according to the first frequency point list, where a fourth frequency point corresponding to the fourth frequency point cell is not in the first frequency point list. Transmit a communication-connection-setup complete message for the fourth frequency point cell to an access network device corresponding to the fourth frequency point.

In an implementation, acquire a second frequency point list, where the second frequency point list includes at least one frequency point, and each frequency point in the second frequency point list supports the slice service requested by the terminal device. Determine a prioritized cell according to the second frequency point list, and transmit a communication-connection-setup complete message for the prioritized cell to an access network device corresponding to the prioritized cell.

In a second aspect, a communication device is provided in implementations of the disclosure. The communication device includes an acquiring unit and a processing unit. The acquiring unit is configured to acquire a first frequency point list after the terminal device determines a first frequency point cell, where the first frequency point list includes at least one frequency point, and each frequency point in the first frequency point list is determined by the terminal device as not supporting a slice service requested by the terminal device. The processing unit is configured to determine a second frequency point cell in response to a first frequency point corresponding to the first frequency point cell being in the first frequency point list, where a second frequency point corresponding to the second frequency point cell is not in the first frequency point list.

In a third aspect, a communication device is provided in implementations of the disclosure. The communication device includes a processor, a memory, and a user interface. The processor, the memory, and the user interface are connected with each other. The memory is configured to store a computer program including program instructions. The processor is configured to invoke the program instructions to execute the method for network access described in the first aspect.

In a fourth aspect, a computer-readable storage medium is provided in implementations of the disclosure. The computer-readable storage medium stores one or more instructions. The one or more instructions are loaded and executed by a processor to execute the method for network access described in the first aspect.

In implementations of the disclosure, the terminal device can acquire the first frequency point list after determining the first frequency point cell, where the first frequency point list includes at least one frequency point determined by the terminal device as not supporting the slice service. In response to the first frequency point list including the first frequency point corresponding to the first frequency point cell, it is indicated that the first frequency point does not support the slice service requested by the terminal device. Therefore, in subsequent slice services, the terminal device does not establish connection with the frequency point cell corresponding to the first frequency point. According to the method, the efficiency of network access can be improved, and thus the execution efficiency of network slice can be improved.

### BRIEF DESCRIPTION OF THE DRAWINGS

In order to describe technical solutions of implementations of the disclosure more clearly, the following will give a brief description of accompanying drawings used for describing implementations. Apparently, accompanying drawings described below are merely some implementations of the disclosure. Those of ordinary skill in the art can also obtain other accompanying drawings based on the accompanying drawings without creative efforts.
FIG. 1 is a schematic diagram illustrating a network architecture of network access provided in implementations of the disclosure.
FIG. 2 is a schematic diagram illustrating a method for network access provided in implementations of the disclosure.
FIG. 3 is a schematic diagram illustrating a scenario where a first frequency point list is removed provided in implementations of the disclosure.
FIG. 4 is a schematic diagram illustrating another method for network access provided in implementations of the disclosure.
FIG. 5 is a schematic diagram illustrating another method for network access provided in implementations of the disclosure.
FIG. 6 is a schematic diagram illustrating units of a communication device provided in implementations of the disclosure.
FIG. 7 is a simplified schematic diagram illustrating a physical structure of a communication device provided in implementations of the disclosure.

### DETAILED DESCRIPTION

Technical solutions of implementations of the disclosure will be described clearly and completely with reference to accompanying drawings in implementations of the disclosure.

In order to understand implementations of the disclosure better, terms used herein are introduced as follows.

Standalone (SA): SA refers to the new 5th-generation (5G) network, including a new base station, a backhaul, and a new core network. In SA, new network elements and new interfaces are introduced, new technologies such as network virtualization and software defined network are further adopted on a large scale, and SA is combined with new radio (NR). An SA network architecture is easier than a non-standalone (NSA) network architecture. A control plane connection and a user plane connection can be directly established between a terminal device and NR, and there is no need for the SA network architecture to configure NR via long term evolution (LTE), which is different from the NSA architecture. Further, configuration of the SA network architecture can meet latency requirements and transmission reliability requirements of 5G, which is different from evolved packet core (EPC). A 5G SA network architecture can support network slice services.

Network slicing: Network slicing refers to dividing a physical network of an operator into multiple virtual networks. Each virtual network is obtained according to different service requirements, such as latency, bandwidth, security, and reliability, to flexibly adapt to different network application scenarios. A separate physical network is divided into multiple logical networks via network slicing, thus avoiding constructing a dedicated physical network for each service. There are three main application scenarios of 5G network, i.e., enhanced mobile broadband (eMBB), massive machine type of communication (mMTC), and ultra-reliable and low latency communications (URLLC). The three application scenarios have different requirements on network services, such as bandwidth and latency, such that network slicing can be adapted to different network application environments. In practical applications, one network slice service is indicated by single network slice selection assistance information (S-NSSAI). At least one S-NSSAI can be assigned as a set to constitute network slice selection assistance information (NSSAI), i.e., NSSAI includes at least one S-NSSAI, or NSSAI may be deemed as a list including S-NSSAI.

Frequency point: Frequency point refers to a specific absolute frequency value, which is generally a center frequency of a modulation signal. A frequency point is a serial number of a fixed frequency.

Frequency point cell: A frequency point cell refers to a cell under a frequency point. An access network device can be configured with at least one frequency point, and at least one frequency point cell can be distributed under a frequency point. A terminal device can set up communication connection with the access network device via a frequency point cell.

Radio resource control (RRC): RRC is also known as radio resource management or radio resource allocation, which refers to radio resource management, control and scheduling via certain schemes and methods. Under the requirements of quality of service (QoS), RRC can make full use of limited wireless network resources as much as possible to ensure that planned coverage area can be covered, thereby improving service capacity and resource utilization as much as possible. A successful RRC connection setup procedure includes RRC connection request, RRC connection setup, and RRC connection setup completion. Before the RRC connection setup completion, a terminal device can transmit to an access network device a RRC connection setup complete message for a cell accessed by the terminal device. The RRC connection setup complete message includes a network slice service requested by the terminal device. If a cell of the access network device does not support the network slice service requested by the terminal device, a RRC connection release procedure is initiated immediately after RRC connection is successfully set up, i.e., the access network device transmits a RRC connection release message to the terminal device via the cell. After RRC connection release is completed, the terminal device can perform cell selection or cell reselection.

In order to facilitate understanding of implementations of the disclosure, a network architecture that can be applied to implementations of the disclosure is described below.

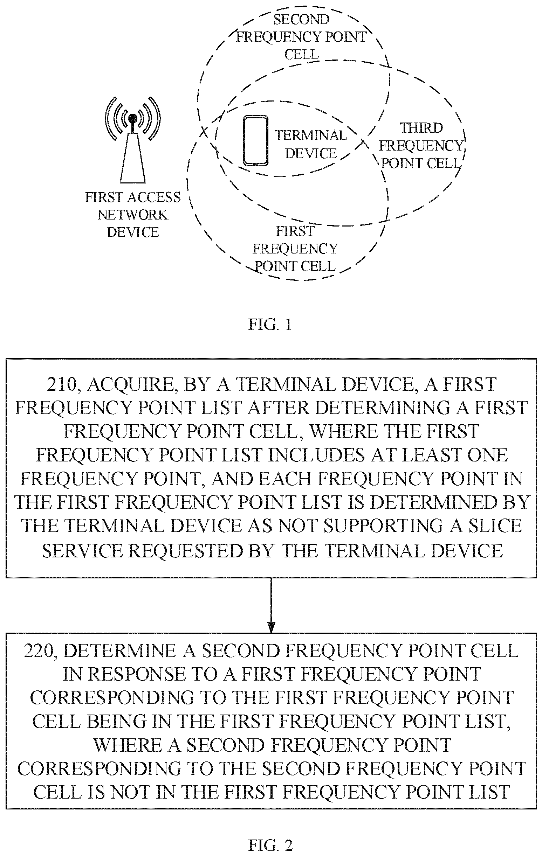

Referring to FIG. 1, FIG. 1 is a schematic diagram illustrating a network architecture of network access provided in implementations of the disclosure. As illustrated in FIG. 1, the network architecture includes a first access network device, and a first frequency point cell is distributed under the first access network device. A second frequency point cell and a third frequency point cell may be distributed under the first access network device or another access network device. A terminal device is in coverage of the three frequency point cells. A frequency point corresponding to the first frequency point cell is a first frequency point, a frequency point corresponding to the second frequency point cell is a second frequency point, and correspondingly, the third frequency point cell corresponds to a third frequency point. In practical applications, one access network device may be configured with at least one cell. In implementations of the disclosure, one frequency point may correspond to multiple frequency point cells. For example, the first frequency point may also correspond to another frequency point cell besides the first frequency point cell. It should be noted that, a first frequency point list in implementations of the disclosure may include a frequency point determined by the terminal device as not supporting a slice service requested by the terminal device. In response to the first frequency point list including a certain frequency point, all frequency point cells under the frequency point are determined by the terminal device as not supporting the slice service requested by the terminal device.

The access network device in implementations of the disclosure is an entity for signal transmission or reception at a network side, and can be configured to translate between received air frames and internet protocol (IP) packets, to serve as a router between the terminal device and rest of an access network. The rest of the access network may include an IP network, etc. The access network device can also coordinate property management of an air interface. For example, the access network device may be an evolved node B (eNB) in LTE, an NR controller, a generation node B (gNB) in the 5G system, a centralized unit, an NR base station, a remote radio unit, a micro base station, a relay, a distributed unit, a transmission reception point (TRP), a transmission point (TP), or any other radio access device, but implementations of the disclosure are not limited herein.

The terminal device in implementations of the disclosure is an entity for signal reception or transmission at a user side. The terminal device may be a device providing a user with voice and/or data connectivity, such as a handheld device, an in-vehicle device, etc., which supports wireless connectivity. The terminal device may also be another processing device connected to a radio modem. The terminal device can communicate with a radio access network (RAN). The terminal device may also be named as a wireless terminal, a subscriber unit, a subscriber station, a mobile station, a mobile, a remote station, an access point, a remote terminal, an access terminal, a user terminal, a user agent, a user device, or a user equipment (UE), etc. The terminal device may also be a mobile terminal, for example, a mobile phone (or named as a cellular phone) and a computer equipped with a mobile terminal, such as a portable, vest-pocket, handheld, computer-built, or vehicle-mounted mobile device, which exchange language and/or data with the RAN. For instance, the terminal device may also be a personal communication service (PCS) phone, a cordless telephone, a session initiation protocol (SIP) phone, a wireless local loop (WLL) station, a personal digital assistant (PDA), etc. Common terminal devices may for example include a cellphone, a tablet computer, a laptop, a palm computer, a mobile internet device (MID), a vehicle, a roadside device, an air vehicle, a wearable device such as a smart watch, a smart bracelet, a pedometer, etc., but implementations of the disclosure are not limited herein. The communication method and related devices provided in the disclosure are described in detail below.

In related art, a terminal device can select to access one frequency point cell according to current network environment, signal quality and so on. For example, the terminal device can select to set up communication connection with a first frequency point cell. When setting up communication connection, the terminal device can transmit a communication-connection-setup complete message for the first frequency point cell to a first access network device corresponding to the first frequency point cell. The communication-connection-setup complete message includes a slice service requested by the terminal device. If the first access network device determines that the first frequency point cell does not support the slice service requested by the terminal device, the first access network device releases communication connection between the first frequency point cell and the terminal device. However, when the terminal device initiates slice services subsequently, the terminal device may set up connection again with the first frequency point cell, and the connection may be released again by the first access network device. Therefore, the terminal device needs to perform frequency point cell reselection according to network environment, signal quality and so on. Because of the redundant procedure, network access is inefficient, and execution of the network slice service is also inefficient even fails.

In order to improve efficiency of network access, a method for network access and communication devices are provided in implementations of the disclosure. A method for data service handover and the communication devices provided in implementations of the disclosure will be further introduced in detail as follows.

Referring to FIG. 2, FIG. 2 is a schematic diagram illustrating a method for network access provided in implementations of the disclosure, a network architecture of the implementations of the disclosure is illustrated in FIG. 1, and the method is executed by a terminal device.

At 210, the terminal device acquires a first frequency point list after determining a first frequency point cell, where the first frequency point list includes at least one frequency point, and each frequency point in the first frequency point list is determined by the terminal device as not supporting a slice service requested by the terminal device.

The terminal device can determine the first frequency point cell firstly. The first frequency point cell is a cell for which the terminal device is about to initiate a RRC connection setup procedure, or the first frequency point cell is a cell for which the terminal device is about to initiate a network slice service request since the network slice service request needs to be realized via the RRC connection setup procedure. The terminal device can select one prioritized frequency point cell according to signal quality of cells in current network environment where the terminal device is located, or can also determine one frequency point cell according to a service request of the terminal device. As illustrated in FIG. 1, the terminal device can determine the first frequency point cell when the terminal device is started, or can also determine the first frequency point cell according to the service request of the terminal device. After determining the first frequency point cell, the terminal device can acquire the first frequency point list. The first frequency point list may be a bar list. The first frequency point list includes at least one frequency point, and each frequency point is determined by the terminal device as not supporting the slice service requested by the terminal device.

At 220, determine a second frequency point cell in response to a first frequency point corresponding to the first frequency point cell being in the first frequency point list, where a second frequency point corresponding to the second frequency point cell is not in the first frequency point list.

After determining the first frequency point cell, in response to that the terminal device determines that the first frequency point corresponding to the first frequency point cell is in the first frequency point list, namely the first frequency point corresponding to the first frequency point cell is determined by the terminal device as not supporting the slice service requested by the terminal device, the terminal device sets up connection with the second frequency point cell rather than the first frequency point cell. The second frequency point corresponding to the second frequency point cell is not in the first frequency point list.

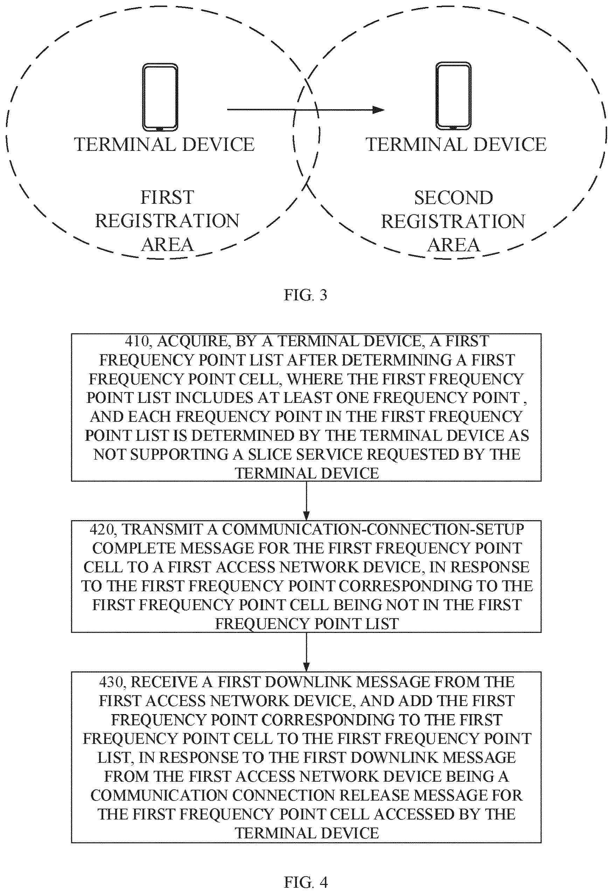

In an optional implementation, referring to FIG. 3, FIG. 3 is a schematic diagram illustrating a scenario where the first frequency point list is removed provided in implementations of the disclosure. As illustrated in FIG. 3, the terminal device may currently be in a first registration area (RA). The first frequency point list can be deleted in response to the terminal device being moved into a second RA from the first RA. The first RA may include all parts in the diagram illustrating a network architecture of a network slice service illustrated in FIG. 1. Slice service deployment is based on RAs, such that slice service support remains unchanged in the same RA, but slice service support may vary in different RAs. In other words, a frequency point in the first RA that does not support a slice service requested by the terminal device may support the slice service requested by the terminal device in the second RA. According to the method, it can be prevented that the terminal device still uses the first frequency point list in a previous RA where the terminal device was located in when the terminal device is moved into a new RA.

In an optional implementation, the terminal device can acquire a storage time that a third frequency point in the first frequency point list is stored into the first frequency point list. The third frequency point can be deleted from the first frequency point list in response to an interval between a current time and the storage time being longer than a preset interval. The third frequency point may be any frequency point in the first frequency point list. The preset interval may be set by default by the terminal device, or indicated by an access network device, which is not limited herein. According to the method, a certain frequency point in the first frequency point list may be deleted after the preset interval, and thus the frequency point is not barred. A reason is that the terminal device may mistakenly determine a certain frequency point as not supporting the slice service requested by the terminal device due to a detection error or a logical error of the terminal device. Consequently, connection privilege of the certain frequency point can be restored after the preset interval, which can prevent the terminal device from ignoring the certain frequency point for a long time due to the detection error or the logical error of the terminal device.

In implementations of the disclosure, the terminal device can acquire the first frequency point list after determining the first frequency point cell, determine whether the first frequency point corresponding to the first frequency point cell is in the first frequency point list, and determine the second frequency point cell in response to the first frequency point being in the first frequency point list. Moreover, a frequency point cell under the first frequency point will not be selected again in a subsequent network selection and network reselection. According to the method, repeated connection setup between the terminal device and the frequency point cell corresponding to the first frequency point in the first frequency point list can be avoided, which can improve efficiency and success rate of network access, and can also improve execution efficiency and success rate of network slicing.

Referring to FIG. 4, FIG. 4 is a schematic diagram illustrating another method for network access provided in implementations of the disclosure, a network architecture of the implementations of the disclosure is illustrated in FIG. 1, and the method is executed by a terminal device.

At 410, a terminal device acquires a first frequency point list after determining a first frequency point cell, where the first frequency point list includes at least one frequency point, and each frequency point in the first frequency point list is determined by the terminal device as not supporting a slice service requested by the terminal device.

At 420, transmit a communication-connection-setup complete message for the first frequency point cell to a first access network device, in response to the first frequency point corresponding to the first frequency point cell being not in the first frequency point list.

In response to the first frequency point corresponding to the first frequency point cell being not in the first frequency point list, the terminal device does not determine the first frequency point as a frequency point not supporting the slice service requested by the terminal device. In other words, the terminal device is not sure whether the first frequency point can support the slice service requested by the terminal device. Then the terminal device can transmit the communication-connection-setup complete message for the first frequency point cell to the first access network device. The communication-connection-setup complete message may be a RRC connection setup complete message, and the RRC connection setup complete message may include the slice service requested by the terminal device. It can be understood that, the terminal device transmits the communication-connection-setup complete message for the first frequency point cell to the first access network device to request the slice service.

At 430, receive a first downlink message from the first access network device, and add the first frequency point corresponding to the first frequency point cell to the first frequency point list in response to the first downlink message from the first access network device being a communication connection release message for the first frequency point cell accessed by the terminal device.

The first access network device can determine whether the first frequency point cell supports the slice service request in the communication-connection-setup complete message, upon receiving from the terminal device the communication-connection-setup complete message for the first frequency point cell. In response to the first frequency point cell supporting the slice service request in the communication-connection-setup complete message, the first access network device can execute a corresponding network slice service operation according to the slice service request from the terminal device. In response to the first frequency point cell not supporting the slice service request in the communication-connection-setup complete message, the first access network device will immediately initiate RRC connection release after RRC connection between the first frequency point cell and the terminal device is successfully set up, i.e., the first access network device transmits the communication connection release message to the terminal device via the first frequency point cell. The communication connection release message may be a RRC connection release message. In this case, the communication connection release message is transmitted as the first downlink message. The first downlink message may be downlink signaling. In response to the first downlink message being the communication connection release message, it is indicated that communication of data service information has not been executed between the first frequency point cell and the terminal device, that is, the slice service requested by the terminal device is unsuccessful on the first frequency point cell. However, in response to the first downlink message being data service information, it is indicated that the slice service is successful. The terminal device receives the first downlink message from the first access network device after transmitting the communication-connection-setup complete message for the first frequency point cell to the first access network device. In response to the first downlink message from the first access network device being the communication connection release message for the first frequency point cell accessed by the terminal device, the terminal device can determine that the first frequency point cell does not support the slice service requested by the terminal device. Therefore, the terminal device can add the first frequency point corresponding to the first frequency point cell to the first frequency point list.

The first access network device determines existence of the second frequency point supporting the slice service requested by the terminal device in a current RA before transmitting the communication connection release message to the terminal device. In response to that there is the second frequency point supporting the slice service requested by the terminal device in the current RA, the first access network device adds redirection information to the communication connection release message. The redirection information can indicate to the terminal device the second frequency point supporting the slice service requested by the terminal device in the current RA. There may be at least one second frequency point. Upon receiving the redirection information, the terminal device can randomly select a frequency point from the at least one second frequency point indicated by the first access network device and connect to a frequency point cell corresponding to the selected frequency point, or can determine one frequency point cell according to indexes such as signal quality of a cell corresponding to each second frequency point. It can be understood that the terminal device can perform cell reselection according to the redirection information, and a cell reselected is a cell corresponding to the second frequency point indicated by the first access network device and supporting the slice service requested by the terminal device.

For instance, as illustrated in FIG. 1, the terminal device transmits the communication-connection-setup complete message for the first frequency point cell to the first access network device. In response to that the first access network device determines that a frequency point corresponding to the first frequency point cell does not support the slice service requested by the terminal device, the first access network device will immediately initiate RRC connection release after RRC connection between the terminal device and the first frequency point cell is successfully set up. However, in response to that the first access network device determines that the second frequency point in the RA supports the slice service requested by the terminal device, the first access network device can add the redirection information to the communication connection release message. The redirection information indicates the second frequency point. The terminal device can perform cell reselection upon receiving the redirection information, and then transmits the communication-connection-setup complete message for the second frequency point cell to the access network device corresponding to the second frequency point.

However, the first access network device will transmit the communication connection release message for the first frequency point cell to the terminal device, in response to that the first access network device detects that there is no frequency point supporting the slice service requested by the terminal device in the current RA. The communication connection release message indicates that the first frequency point does not support the slice service requested by the terminal device. Then the terminal device adds the first frequency point to the first frequency point list. The terminal device can determine a fourth frequency point cell according to the first frequency point list currently updated, and transmit a communication-connection-setup complete message for the fourth frequency point cell to an access network device corresponding to a fourth frequency point. The fourth frequency point corresponding to the fourth frequency point cell is not in the first frequency point list.

In an optional implementation, in response to that the communication connection release message includes the redirection information, the redirection information indicates a frequency point supporting the slice service requested by the terminal device. The terminal device can delete the frequency point from the first frequency point list in response to that the terminal device detects that the frequency point is stored in the first frequency point list. According to the method, a frequency point added to the first frequency point list mistakenly due to a detection error or a logical error of the terminal device can be deleted from the first frequency point list, and thus the frequency point will not be barred.

In implementations of the disclosure, upon receiving a communication connection release message for a frequency point cell transmitted by the access network device, the terminal device can add a frequency point corresponding to the frequency point cell to the first frequency point list. Thus all cells corresponding to the frequency point are barred in subsequent cell selection of the terminal device. Therefore, repeated connection setup can be avoided between the terminal device and a frequency point cell corresponding to a frequency point in the first frequency point list, which can improve efficiency and success rate of network access, and can also improve execution efficiency and success rate of the slice service.

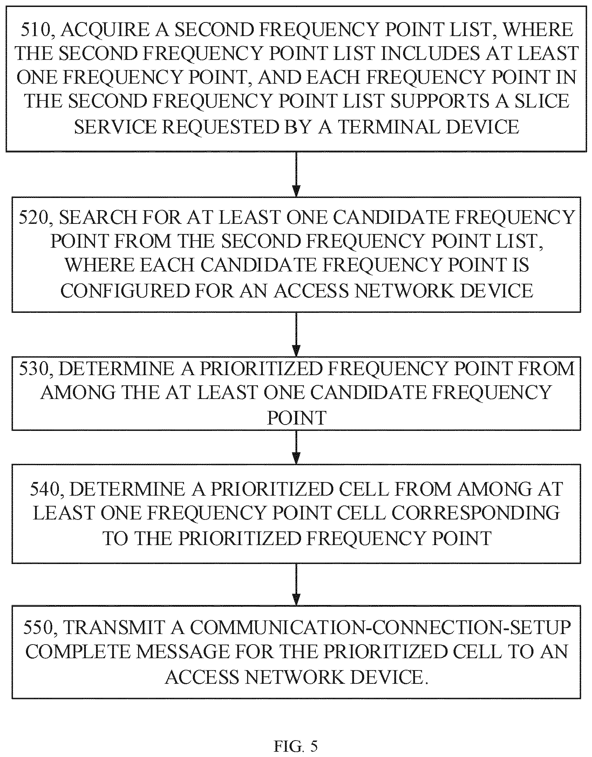

As illustrated in FIG. 5, FIG. 5 is a schematic diagram illustrating another method for network access provided in implementations of the disclosure.

At 510, acquire a second frequency point list, where the second frequency point list includes at least one frequency point, and each frequency point in the second frequency point list supports a slice service requested by a terminal device.

At 520, search for at least one candidate frequency point from the second frequency point list, where each candidate frequency point is configured for an access network device.

At 530, determine a prioritized frequency point inform among the at least one candidate frequency point.

At 540, determine a prioritized cell from among at least one frequency point cell corresponding to the prioritized frequency point.

The terminal device determines the prioritized cell from among the at least one frequency point cell corresponding to the prioritized frequency point according to network environment, signal quality and so on.

At 550, transmit a communication-connection-setup complete message for the prioritized cell to an access network device corresponding to the prioritized cell.

For example, the terminal device has found two candidate frequency points from the second frequency point list, and thus can determine one prioritized frequency point from the two prioritized frequency points. Since there is at least one frequency point cell under one prioritized frequency point, the terminal device further needs to determine one prioritized frequency point cell according to signal quality of each cell and so on, and requests a slice service from the prioritized cell.

In implementations of the disclosure, the terminal device can configure a second frequency point list. In response to that the terminal device determines that in a current RA there is a frequency point in the second frequency point list, the terminal device can preferably select a prioritized cell corresponding to the frequency point to set up RRC connection, and then executes a network slice service.

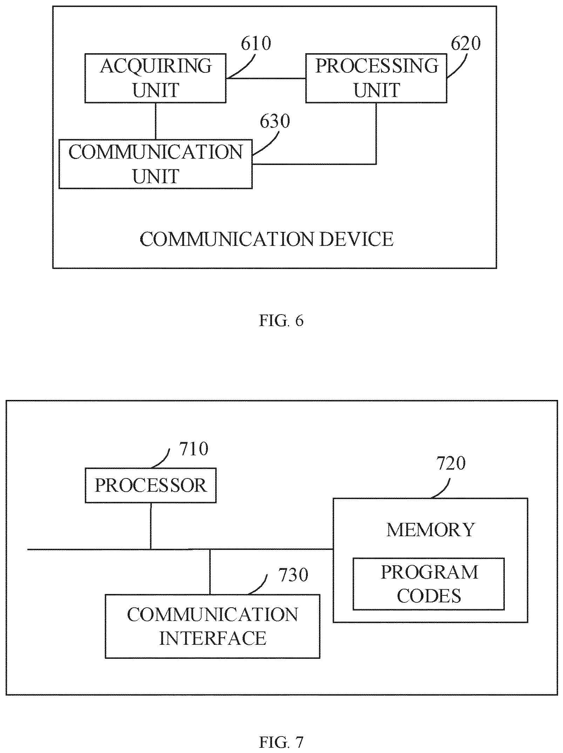

Referring to FIG. 6, FIG. 6 is a schematic diagram illustrating units of a communication device provided in implementations of the disclosure. The communication device illustrated in FIG. 6 can be configured to execute at least part of or all functions of the terminal device mentioned in the method implementations described in FIG. 2, FIG. 4, and FIG. 5. The communication device may be a terminal device, an apparatus in the terminal device, or a device which can be adapted to the terminal device for use. Logical structures of the communication device may include an acquiring unit 610, a processing unit 620, and a communication unit 630.

The acquiring unit 610 is configured to acquire a first frequency point list after the terminal device determines a first frequency point cell, where the first frequency point list includes at least one frequency point, and each frequency point in the first frequency point list is determined by the terminal device as not supporting a slice service requested by the terminal device.

The processing unit 620 is configured to determine a second frequency point cell in response to a first frequency point corresponding to the first frequency point cell being in the first frequency point list, where a second frequency point corresponding to the second frequency point cell is not in the first frequency point list.

In an optional implementation, the communication unit 630 is configured to transmit a communication-connection-setup complete message for the first frequency point cell to a first access network device, in response to the first frequency point corresponding to the first frequency point cell being not in the first frequency point list, where the communication-connection-setup complete message includes the slice service requested by the terminal device.

In an optional implementation, the communication unit 630 receives a first downlink message from the first access network device, after transmitting the communication-connection-setup complete message for the first frequency point cell to the first access network device. The processing unit 620 adds the first frequency point corresponding to the first frequency point cell to the first frequency point list, in response to the first downlink message from the first access network device being a communication connection release message for the first frequency point cell accessed by the terminal device.

In an optional implementation, the terminal device is currently in a first RA.

In an optional implementation, the processing unit 620 deletes the first frequency point list in response to the terminal device being moved into a second RA from the first RA.

In an optional implementation, the acquiring unit 610 acquires a storage time that a third frequency point in the first frequency point list is stored into the first frequency point list, where the third frequency point is any frequency point in the first frequency point list. The processing unit 620 deletes the third frequency point from the first frequency point list in response to an interval between a current time and the storage time being longer than a preset interval.

In an optional implementation, the communication connection release message includes redirection information, where the redirection information indicates the second frequency point supporting the slice service requested by the terminal device.

In an optional implementation, the processing unit 620 deletes the second frequency point from the first frequency point list, upon detecting that the second frequency point is stored in the first frequency point list.

In an optional implementation, the communication connection release message indicates that the first frequency point does not support the slice service requested by the terminal device.

In an optional implementation, the processing unit 620 determines a fourth frequency point cell according to the first frequency point list, where a fourth frequency point corresponding to the fourth frequency point cell is not in the first frequency point list. The communication unit 630 transmits a communication-connection-setup complete message to an access network device corresponding to the fourth frequency point cell.

In an optional implementation, the acquiring unit 610 acquires a second frequency point list, where the second frequency point list includes at least one frequency point, and each frequency point in the second frequency point list supports the slice service requested by the terminal device. The processing unit 620 determines a prioritized cell according to the second frequency point list. The communication unit 630 transmits a communication-connection-setup complete message for the prioritized cell to an access network device corresponding to the prioritized cell.

Referring to FIG. 7, FIG. 7 is a simplified schematic diagram illustrating a physical structure of a communication device provided in implementations of the disclosure. The communication device includes a processor 710, a memory 720, and a communication interface 730. The processor 710, the memory 720, and the communication interface 730 are connected through one or more communication buses.

The processor 710 is configured to support the communication device to execute corresponding functions in the method in FIG. 2, FIG. 4, and FIG. 5. The processor 710 may be a central processing unit (CPU), a network processor (NP), a hardware chip or any combination thereof.

The memory 720 is configured to store program codes and so on. The memory 720 may include a volatile memory, such as a random access memory (RAM). The memory 720 may include a non-volatile memory, such as a read-only memory (ROM), a flash memory, a hard disk drive (HDD), or a solid-state drive (SSD). The memory 720 may also include a combination of the above-mentioned memories.

The communication interface 730 is configured to receive and transmit data, information, or messages etc. The communication interface 730 can also be described as a transceiver or a transmitting and receiving circuit. For example, the communication interface 730 is configured to transmit a communication-connection-setup complete message for a first frequency point cell to a first access network device, or receive from the first access network device a communication connection release message for the first frequency point cell accessed by the terminal device.

In implementations of the disclosure, the processor 710 can invoke the program codes stored in the memory 720 to execute following operations when the communication device is applied to the terminal device.

In an optional implementation, the processor 710 invokes the program codes stored in the memory 720 to acquire a first frequency point list after the terminal device determines the first frequency point cell. The first frequency point list includes at least one frequency point, and each frequency point in the first frequency point list is determined by the terminal device as not supporting a slice service requested by the terminal device.

In an optional implementation, the processor 710 invokes the program codes stored in the memory 720 to determine a second frequency point cell in response to a first frequency point corresponding to the first frequency point cell being in the first frequency point list. A second frequency point corresponding to the second frequency point cell is not in the first frequency point list.

In an optional implementation, the communication interface 730 is controlled to transmit a communication-connection-setup complete message for the first frequency point cell to the first access network device, in response to the first frequency point corresponding to the first frequency point cell being not in the first frequency point list. The communication-connection-setup complete message includes the slice service requested by the terminal device.

In an optional implementation, the communication interface 730 is controlled to receive a first downlink message from the first access network device, after the communication interface 730 is controlled to transmit the communication-connection-setup complete message for the first frequency point cell to the first access network device. The processor 710 invokes the program codes stored in the memory 720 to add the first frequency point corresponding to the first frequency point cell to the first frequency point list, in response to the first downlink message from the first access network device being a communication connection release message for the first frequency point cell accessed by the terminal device.

In an optional implementation, the terminal device is currently in a first RA.

In an optional implementation, the processor 710 invokes the program codes stored in the memory 720 to delete the first frequency point list in response to the terminal device being moved into a second RA from the first RA.

In an optional implementation, the processor 710 invokes the program codes stored in the memory 720 to acquire storage time that a third frequency point in the first frequency point list is stored into the first frequency point list, where the third frequency point in the first frequency point list is any frequency point in the first frequency point list. The processor 710 deletes the third frequency point from the first frequency point list in response to an interval between a current time and the storage time being longer than a preset interval.

In an optional implementation, the communication connection release message includes redirection information, where the redirection information indicates the second frequency point supporting the slice service requested by the terminal device.

In an optional implementation, the processor 710 invokes the program codes stored in the memory 720 to delete the second frequency point from the first frequency point list, upon detecting that the second frequency point is stored in the first frequency point list.

In an optional implementation, the communication connection release message indicates that the first frequency point does not support the slice service requested by the terminal device.

In an optional implementation, the processor 710 invokes the program codes stored in the memory 720 to determine a fourth frequency point cell according to the first frequency point list, and control the communication interface 730 to transmit a communication-connection-setup complete message to the fourth frequency point cell, where a fourth frequency point corresponding to the fourth frequency point cell is not in the first frequency point list.

In an optional implementation, the processor 710 invokes the program codes stored in the memory 720 to acquire a second frequency point list, where the second frequency point list includes at least one frequency point, and each frequency point in the second frequency point list supports the slice service requested by the terminal device. The processor 710 invokes the program codes stored in the memory 720 to determine a prioritized cell according to the second frequency point list, determine a prioritized cell from among at least one frequency point cell corresponding to the prioritized frequency point, and control the communication interface 730 to transmit a communication-connection-setup complete message for the prioritized cell to an access network device corresponding to the prioritized cell.

It should be noted that, in the foregoing implementations, the description for each implementation has its own emphasis. For the parts not described in detail in one implementation, reference may be made to related descriptions in other implementations.

The steps of the method described in implementations of the disclosure can be reordered, combined, or deleted according to actual needs.

The units of the processing device described in implementations of the disclosure can be combined, divided, or deleted according to actual needs.

All or part of the above implementations can be implemented through software, hardware, firmware, or any other combination thereof. When implemented by software, all or part of the above implementations can be implemented in the form of a computer program product. The computer program product includes one or more computer instructions. When the computer instructions are loaded and executed on a computer, all or part of the operations or functions of the implementations of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line, etc. The wireless manner can be, for example, infrared, wireless, microwave, etc. The computer-readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD), or a semiconductor medium (such as a solid state disk (SSD), etc.

It should be finally noted that, implementations described herein are merely for explaining, rather than limiting, technical solutions of the disclosure. Although the disclosure has been described in detail with reference to the above-mentioned implementations, those of ordinary skill in the art should understand that they can modify technical solutions of the above-mentioned implementations, or make equivalent replacements for at least part of technical features of the above-mentioned implementations. These modifications or replacements do not make the essence of the corresponding technical solutions deviate from the scope of the technical solutions of each implementation of the disclosure.

## Claims

1. A method for network access, comprising:
acquiring, by a terminal device, a first frequency point list after determining a first frequency point cell, the first frequency point list comprising at least one frequency point, and each frequency point in the first frequency point list being determined by the terminal device as not supporting a slice service requested by the terminal device; and
determining a second frequency point cell in response to a first frequency point corresponding to the first frequency point cell being in the first frequency point list, a second frequency point corresponding to the second frequency point cell being not in the first frequency point list.

2. The method of claim 1, further comprising:
transmitting a communication-connection-setup complete message for the first frequency point cell to a first access network device, in response to the first frequency point corresponding to the first frequency point cell being not in the first frequency point list, wherein the communication-connection-setup complete message comprises the slice service requested by the terminal device.

3. The method of claim 2, wherein after transmitting the communication-connection-setup complete message for the first frequency point cell to the first access network device, the method further comprises:
receiving a first downlink message from the first access network device; and
adding the first frequency point corresponding to the first frequency point cell to the first frequency point list, in response to the first downlink message from the first access network device being a communication connection release message for the first frequency point cell accessed by the terminal device.

4. The method of any one of claims 1 to 3, wherein the terminal device is currently in a first registration area;
the method further comprises deleting the first frequency point list in response to the terminal device being moved into a second registration area from the first registration area.

5. The method of claim 1, further comprising:
acquiring a storage time that a third frequency point in the first frequency point list is stored into the first frequency point list, wherein the third frequency point is any frequency point in the first frequency point list; and
deleting the third frequency point from the first frequency point list in response to an interval between a current time and the storage time being longer than a preset interval.

6. The method of claim 3, wherein the communication connection release message comprises redirection information, wherein the redirection information indicates the second frequency point supporting the slice service requested by the terminal device;
the method further comprises deleting the second frequency point from the first frequency point list, upon detecting that the second frequency point is stored in the first frequency point list.

7. The method of claim 3, wherein the communication connection release message indicates that the first frequency point does not support the slice service requested by the terminal device,
the method further comprises:
determining a fourth frequency point cell according to the first frequency point list,
wherein a fourth frequency point corresponding to the fourth frequency point cell is not in the first frequency point list; and
transmitting a communication-connection-setup complete message for the fourth frequency point cell to an access network device corresponding to the fourth frequency point.

8. The method of claim 1, further comprising:
acquiring a second frequency point list, wherein the second frequency point list comprises at least one frequency point, and each frequency point in the second frequency point list supports the slice service requested by the terminal device;
determining a prioritized cell according to the second frequency point list; and
transmitting a communication-connection-setup complete message for the prioritized cell to an access network device corresponding to the prioritized cell.

9. A communication device, applied to a terminal device being in a first registration area and comprising:
an acquiring unit configured to acquire a first frequency point list after the terminal device determines a first frequency point cell, the first frequency point list comprising at least one frequency point, and each frequency point in the first frequency point list being determined by the terminal device as not supporting a slice service requested by the terminal device; and
a processing unit configured to determine a second frequency point cell in response to a first frequency point corresponding to the first frequency point cell being in the first frequency point list, a second frequency point corresponding to the second frequency point cell being not in the first frequency point list.

10. A communication device, comprising a processor, a memory, and a user interface, the processor, the memory, and the user interface being connected with each other, the memory being configured to store a computer program comprising program instructions, and the processor being configured to invoke the program instructions to execute the method for network access of any one of claims 1 to 8.

11. A computer-readable storage medium storing one or more instructions, the one or more instructions being loaded and executed by a processor to execute the method for network access of any one of claims 1 to 8.
